# EUROPÄISCHE PATENTANMELDUNG

(11) **EP 1 464 830 A1**
(43) Veröffentlichungstag der Anmeldung: **06.10.2004**
(21) Anmeldenummer: 03100840.2
(22) Anmeldetag: 31.03.2003
(51) Int. Cl.: F02N 17/00, F02N 17/08, F02D 41/06, F02D 13/02

(54) **Verfahren zur Steuerung einer Brennkraftmaschine vor und nach einem Motorstillstand**

(71) Anmelder: Ford Global Technologies, Inc., A subsidiary of Ford Motor Company, Dearborn, Michigan 48126 (US)
(72) Erfinder: Grieser, Klemens, 40764, Langenfeld (DE); Kramer, Ulrich, 51427, Bergisch Gladbach (DE); Phlips, Patrick Joseph, 50858, Koeln (DE)
(74) Vertreter: Drömer, Hans-Carsten, Dr.-Ing.

(57) **Zusammenfassung**

Die Erfindung betrifft ein Verfahren zur variablen Steuerung der Ventilöffnungszeiten einer Brennkraftmaschine mit Direkteinspritzung und Fremdzündung vor einem Motorstillstand sowie in der Startphase nach einem Motorstillstand, wobei während der Startphase von Anfang an eine Verbrennung zur Unterstützung oder alleinigen Veranlassung des Startens stattfindet. Um die Energiegewinnung zu maximieren und Verluste zu minimieren, wird eine Ventilsteuerung vorgenommen, die eine möglichst große Frischluftfüllung der Zylinder und/oder eine Minimierung der Pumparbeit bewirkt. Dabei kann insbesondere ein Öffnen der Auslaßventile (EV) im Intervall Δ_{EVO} = [160°,200°], ein Schließen der Auslaßventile (EV) im Intervall Δ_{EVC} = [340°,380°], ein Öffnen der Einlaßventile (IV) im Intervall Δ_{IVO1} = [340°,380°] beziehungsweise Δ_{IVO2} = [380°,480°], und ein Schließen der Einlaßventile (IV) im Intervall Δ_{IVC} = [560°,660°] erfolgen. Ähnliche Intervalle sind auch für die Auslaufphase der Brennkraftmaschine bevorzugt.

## Beschreibung

Die Erfindung betrifft ein Verfahren zur Steuerung einer Brennkraftmaschine vor bzw. nach einem Motorstillstand sowie eine zur Durchführung eines derartigen Verfahrens eingerichtete Brennkraftmaschine.

Zur Verbesserung der Kraftstoffausnutzung in Fahrzeugen mit Verbrennungsmotor erfolgt häufig anstelle eines Leerlaufbetriebes ein vollständiges Abstellen des Motors, wenn keine Antriebsleistung benötigt wird. Der Motor muß dann neu angelassen werden, wenn seine Leistung wieder benötigt wird. Für das Anlassen weisen herkömmliche Brennkraftmaschinen spezielle Hilfsaggregate wie etwa einen Anlassermotor oder einen als Motor einsetzbaren Generator (sog. Startergenerator) auf. Hierbei handelt es sich um verhältnismäßig große und kostenaufwändige Einrichtungen, da für das Anlassen des Verbrennungsmotors eine hohe elektrische Leistung erforderlich ist.

Darüber hinaus ist es bekannt, eine Brennkraftmaschine "direkt" durch Auslösen einer Verbrennung anzulassen. Dies ist insbesondere bei Brennkraftmaschinen mit Funkenzündung und Direkteinspritzung möglich. Der direkt in die Brennkammer eingespritzte Kraftstoff wird dabei durch einen Funken gezündet, und die anschließende Explosion des Luft-Kraftstoff-Gemisches bewegt den Kolben und startet den Motor, ohne daß die Kurbelwelle durch ein zusätzliches Hilfsaggregat bewegt werden müßte. Ein derartiges direktes Anlassen des Motors erfordert bestimmte Randbedingungen, um erfolgreich durchgeführt werden zu können. Beispielsweise ist es erforderlich bzw. vorteilhaft, daß die Kurbelwelle zu Beginn des Anlassens in oder nahe einer bestimmten Position steht.

Bei einer Kombination obiger Methoden erfolgt während des Anlassens einer Brennkraftmaschine durch einen Startermotor bereits früh bzw. von Anfang an eine Einspritzung und Verbrennung in den Zylindern, um hierdurch den Anlasser zu unterstützen.

Ferner ist aus der DE 100 20 104 A1 ein Verfahren zum direkten Anlassen einer mehrzylindrigen Brennkraftmaschine bekannt, bei welchem die Ventile eines Kolbens, der sich in einer Stellung nach einem oberen Totpunkt befindet, vor dem starterlosen Anlassen der Brennkraftmaschine in eine der Arbeitsphase entsprechende Stellung gebracht werden.

In DE0010020325A1 und DE0019955857A1 wird dem Anlaßvorgang durch Zündung des im Expansionszylinder befindlichen Kraftstoff-Luft-Gemisches ein Rückdrehen der Brennkraftmaschine (Drehung gegen Motordrehrichtung) vorgeschaltet, welches durch Zündung des im Kompressionszylinder befindlichen Kraftstoff-Luft-Gemisches hervorgerufen wird. Das Rückdrehen dient der Komprimierung des Expansionszylinderluftgehaltes und damit der Verbesserung der Starteigenschaften.

Ein sich im Arbeitstakt befindlicher Zylinder ist von dem Auslaufvorgang einer Brennkraftmaschine her mit Frischluft bei etwa Atmosphärendruck gefüllt. Im Vergleich zum normalen Arbeitstakt einer Brennkraftmaschine, welcher in der Regel mit verdichteter Luft arbeitet, ist die Füllung des Arbeitszylinders bei Atmosphärendruck sehr gering. Dementsprechend ist die aus der Verbrennung des Luft-Kraftstoff-Gemisches nutzbare mechanische Leistung verhältnismäßig klein.

Vor diesem Hintergrund war es Aufgabe der vorliegenden Erfindung, Mittel bereitzustellen, die ein effizientes Anlassen einer Brennkraftmaschine mit Unterstützung durch eine von Anfang an stattfindende Verbrennung erlauben.

Diese Aufgabe wird durch ein Verfahren mit den Merkmalen des Anspruchs 1 sowie durch eine Brennkraftmaschine mit den Merkmalen des Anspruchs 11 gelöst.

Vorteilhafte Ausgestaltungen sind in den Unteransprüchen enthalten.

Das erfindungsgemäße Verfahren dient der Steuerung einer Brennkraftmaschine zeitlich angrenzend an einen Motorstillstand, d.h. in der Auslaufphase (vom Abstellen der Zündung bzw. der Kraftstoffzufuhr bis zum Erreichen des Motorstillstand) und/oder in der Startphase (vom Ende des Motorstillstand bis zum Erreichen einer vorgegebenen Mindestdrehzahl, typischerweise der Leerlaufdrehzahl). Bei dem Verfahren wird bereits während des Anlassens - vorzugsweise vom ersten Arbeitstakt an, den ein jeder Zylinder der Brennkraftmaschine durchläufteine Verbrennung durchgeführt. Die Verbrennung sorgt für eine Eigenbewegung des Motors, welche ein externes Hilfsaggregat unterstützt oder sogar ein direktes Starten ohne Hilfsaggregat möglich macht. Das Verfahren ist dadurch gekennzeichnet, daß die Ventilzeiten der Einlaß- und/oder Auslaßventile der Brennkraftmaschine so gesteuert werden, daß während der Startphase von der ersten Füllung eines jeden Zylinders der Brennkraftmaschine an bis zum Erreichen einer vorgegebenen Mindestdrehzahl eine maximale Arbeitsleistung aus der Verbrennung in den Zylindern genutzt wird. Der ersten in Motordrehrichtung wirkenden Verbrennung kann dabei auch eine Verdichtung des Zylinderinhaltes durch Rückdrehen der Kurbelwelle vorgeschaltet sein. Die Nutzung einer maximalen Arbeitsleistung kann dabei als Teilaspekt auch eine Reduzierung der von der Brennkraftmaschine zu leistenden Arbeit (z. B. Pumparbeit) enthalten.

Mit dem beschriebenen Verfahren wird eine variable Ventilsteuerung eingesetzt, um einen durch Kraftstoffzündungen unterstützten oder sogar direkt ausgeführten Motorstart zu fördern. Die Ventilsteuerung trägt dabei der Tatsache Rechnung, daß während eines solchen Anlassens aufgrund der geringeren Luftfüllung der Zylinder im Vergleich zum regulären Motorbetrieb nur eine geringere Motorleistung verfügbar ist, und versucht, unter den gegebenen Umständen die Energieausbeute zu maximieren. Die Maximierung der Arbeitsleistung des Motors kann durch eine entsprechende Ventilsteuerung vorteilhafterweise derart erreicht werden, daß eine möglichst geringe Verschlechterung des Motorverhaltens hinsichtlich der Geräuschentwicklung, der Vibration und der Laufunruhe (NVH: noise, vibration, harshness) eintritt.

Für die Maximierung der erreichten Leistung durch eine Ventilsteuerung stehen eine Reihe von Einzelmaßnahmen zur Verfügung, welche einzeln oder in beliebigen Kombinationen angewendet werden können und welche Gegenstand der nachfolgend beschriebenen speziellen Ausgestaltungen der Erfindung sind.

Eine erste Reihe spezieller Ausgestaltungen der Erfindung betrifft die Ventilsteuerung während des Anlassens der Brennkraftmaschine nach einem Motorstillstand. Die Ventilsteuerung folgt dabei dem Ziel, eine maximale Zylinderfüllung mit Frischluft sowie eine Reduzierung der für eine Rotation der Brennkraftmaschine erforderlichen Arbeit zu erreichen, ohne das NVH-Verhalten signifikant zu verschlechtern. Dieses Ziel wird gemäß einem ersten Aspekt der Erfindung dadurch erreicht, daß während des Anlassens der Brennkraftmaschine die Auslaßventile in der Nähe des unteren Totpunktes des jeweiligen Kolbens, vorzugsweise bei ca. ±20° des Kurbelwellenwinkels vor bzw. hinter dem unteren Totpunkt geöffnet werden. Wenn die Auslaßventile erst in der Nähe des unteren Totpunktes geöffnet werden, wird ein Maximum an Energie aus der Expansion des gezündeten Luft-Kraftstoff-Gemisches für das Anlassen der Brennkraftmaschine ausgenutzt.
Das Schließen der Auslaßventile erfolgt während des Anlassens der Brennkraftmaschine vorzugsweise in der Nähe des oberen Totpunktes des jeweiligen Kolbens, vorzugsweise in einem Intervall von ±20° Kurbelwellenwinkel vor bzw. hinter dem oberen Totpunkt. Ein solches Schließen der Auslässe im Bereich des oberen Totpunktes stellt sicher, daß Abgase möglichst vollständig aus dem Zylinder entfernt werden, da das verbleibende Brennkammervolumen am oberen Totpunkt eines Kolbens minimal ist. Ein Schließen der Auslaßventile früher vor dem oberen Totpunkt würde dagegen zu einer unvollständigen Entfernung der Abgase führen, während ein Schließen der Auslaßventile weiter hinter dem oberen Totpunkt ein Zurücksaugen der Abgase aus dem Auslaßkrümmer erlauben würde. Das durch ein Schließen der Auslaßventile am oberen Totpunkt erreichte minimale Abgasvolumen im Zylinder ermöglicht andererseits eine maximale Füllung der Brennkammer mit Frischluft während der anschließenden Einlaßphase.

Für ein optimales Öffnen der Einlaßventile während des Anlassens der Brennkraftmaschine gibt es zwei bevorzugte Zeiträume. Der erste bevorzugte Zeitraum für das Öffnen der Einlaßventile liegt in der Nähe des oberen Totpunktes des jeweiligen Kolbens, d.h. vorzugsweise ±20° Kurbelwellenwinkel vor bzw. hinter dem oberen Totpunkt. Würde das Einlaßventil früher vor dem oberen Totpunkt öffnen, so könnten noch im Zylinder befindliche Abgase in den Ansaugkrümmer gelangen und anschließend zurück in die Brennkammer fließen, was die Menge an Frischluft im Zylinder verringern würde. Ein Öffnen der Einlaßventile weiter hinter dem oberen Totpunkt erhöht dagegen die Pumparbeit, die die Brennkraftmaschine zu leisten hat.

Das erwähnte alternative Zeitintervall für das bevorzugte Öffnen der Einlaßventile während des Anlassens der Brennkraftmaschine liegt weit hinter dem oberen Totpunkt des jeweiligen Kolbens, vorzugsweise in einem Bereich von ca. 20° bis 120° Kurbelwellenwinkel hinter dem oberen Totpunkt. Ein solches verhältnismäßig spätes Öffnen der Einlaßventile sorgt für einen Unterdruck im Zylinder und damit für einen beschleunigten Fluß an Frischluft in den Zylinder, was der Mischung von Luft und Kraftstoff und damit einer verbesserten Verbrennung zugute kommt. Je nach den sonstigen Randbedingungen des Motorbetriebs kann dieser positive Effekt der verbesserten Verbrennung den vorstehend erwähnten Nachteil einer erhöhten Pumparbeit durch das späte Öffnen der Einlaßventile überkompensieren, so daß die zweite Betriebsart zu bevorzugen ist.

Das Schließen der Einlaßventile während des Anlassens der Brennkraftmaschine erfolgt vorzugsweise weit hinter dem unteren Totpunkt des jeweiligen Kolbens, vorzugsweise in einem Bereich von 20° bis 120° des Kurbelwellenwinkels hinter dem unteren Totpunkt. Durch ein derartiges spätes Schließen der Einlaßventile kann die von der Brennkraftmaschine zu leistende Kompressionsarbeit verringert werden, so daß die Rotation der Brennkraftmaschine gegen einen geringeren Widerstand erfolgt und daher mit weniger mechanischer Energie erreicht werden kann.

Eine zweite Gruppe bevorzugter Ausgestaltungen des Verfahrens betrifft die Ventilsteuerung während des Auslaufens der Brennkraftmaschine, d.h. vom Zeitpunkt des Abstellens der Zündung und/oder der Kraftstoffzufuhr bis zum endgültigen Motorstillstand (Drehzahl Null). Gemäß einer ersten Variante findet dabei das Öffnen der Auslaßventile während des Auslaufens der Brennkraftmaschine vor dem unteren Totpunkt des zugehörigen Kolbens statt, vorzugsweise ca. 90° bis ca. 20° Kurbelwellenwinkel vor dem unteren Totpunkt. Durch ein solches frühes Öffnen der Auslaßventile wird für einen frühen Ausstoß der Abgase aus den Zylindern in den Abgasweg gesorgt, so daß diese für den späteren Motorneustart optimal mit Frischluft gefüllt werden können.

Des Weiteren erfolgt das Schließen der Auslaßventile während des Auslaufens der Brennkraftmaschine vorteilhafterweise in der Nähe des oberen Totpunktes des Kolbens, vorzugsweise in einem Bereich von ±20° des Kurbelwellenwinkels vor bzw. hinter dem oberen Totpunkt. Hierdurch wird sichergestellt, daß die maximale Menge an Abgas aus dem Zylinder entfernt wird, da das Volumen der Brennkammer am oberen Totpunkt des Kolbens minimal ist. Ein früheres Schließen der Auslaßventile würde eine unvollständige Abgasentfernung und ein späteres Schließen der Auslaßventile ein Rücksaugen der Abgase aus dem Auslaßkrümmer bedeuten, wobei das jeweilige Abgasvolumen einer Füllung des Zylinders mit Frischluft verloren ginge.

Das Öffnen der Einlaßventile findet während des Auslaufens der Brennkraftmaschine vorzugsweise in einem Bereich um den oberen Totpunkt des zugehörigen Kolbens statt, das heißt typischerweise in einem Bereich von ±20° des Kurbelwellenwinkels vor bzw. hinter dem oberen Totpunkt. Hierdurch wird eine minimale Restfüllung der Zylinder mit Abgasen erreicht. Würden die Einlaßventile vor dem oberen Totpunkt geöffnet, so könnten Abgase in das Einlaßsystem strömen und anschließend hieraus zurück in den Zylinder gesaugt werden.

Schließlich findet das Schließen der Einlaßventile während des Auslaufens der Brennkraftmaschine vorteilhafterweise weit hinter dem unteren Totpunkt des jeweiligen Kolbens statt. Vorzugsweise erfolgt das Schließen bei 20° bis ca. 120° Kurbelwellenwinkel hinter dem unteren Totpunkt. Auf diese Weise wird die von der Brennkraftmaschine zu leistende Kompressionsarbeit verringert, so daß der Motor möglichst ruhig und mit einem guten NVH-Verhalten ausläuft.

Die Erfindung betrifft ferner eine Brennkraftmaschine mit Direkteinspritzung, Fremdzündung und einer variablen Ventilsteuerung, welche dadurch gekennzeichnet ist, daß die Ventilsteuerung für die Durchführung eines Verfahrens der oben erläuterten Art eingerichtet ist. D. h., daß die Ventilsteuerung während der Auslaufphase und/oder während der Startphase der Brennkraftmaschine so erfolgt, daß während der Startphase eine maximale Arbeitsleistung aus der Verbrennung in den Zylindern genutzt werden kann. Dies kann insbesondere durch die Realisierung der beschriebenen Programme für die Ventilschließzeiten und Ventilöffnungszeiten realisiert werden. Als variable Ventilsteuerung der Brennkraftmaschine kann prinzipiell jede bekannte und hierfür geeignete Vorrichtung verwendet werden. So kann die variable Ventilsteuerung beispielsweise durch Einrichtungen zur Phasenverschiebung der Nockenwelle und/oder Schalteinrichtu n-gen für das Nockenprofil oder vollständig variable, anpaßbare Ventilsteuerungseinrichtungen wie beispielsweise elektromagnetisch gesteuerte Ventile verwirklicht werden.

Im Folgenden wird die Erfindung mit Hilfe der Figuren beispielhaft näher erläutert. Es zeigen:
- Fig. 1: eine bevorzugte Ventilzeitsteuerung während des Direktstarts einer Brennkraftmaschine mit einer separaten Phasenverstellung der Einlaßnocken und Auslaßnocken;
- Fig. 2: eine bevorzugte Ventilzeitsteuerung während des Direktstarts der Brennkraftmaschine mit einer Phasensteuerung der Einlaßnocken und einer ganz oder teilweise variablen Zeitsteuerung der Auslaßnocken;
- Fig. 3: eine bevorzugte Ventilzeitsteuerung während des Direktstarts einer Brennkraftmaschine mit ganz oder teilweise variablen Zeitsteuerungen der Einlaß- und Auslaßnocken;
- Fig. 4: eine bevorzugte Ventilzeitsteuerung während des Auslaufens einer Brennkraftmaschine.

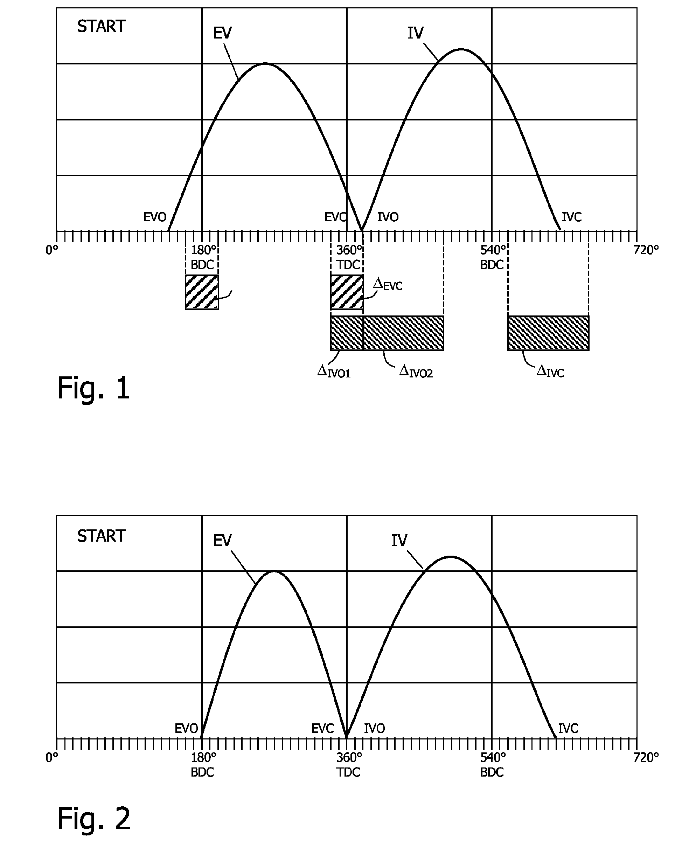

In Figur 1 ist ein Diagramm der Ventilzeitsteuerung dargestellt, bei welchem der Ventilhub (vertikale Achse) eines Auslaßventils EV ("exhaust valve") und eines Einlaßventils IV ("intake valve") über dem Kurbelwellenwinkel (horizontale Achse) für einen kompletten Arbeitstakt des Motors, (0° bis 720° Kurbelwellenwinkel) aufgetragen ist. Die Kurbelwellenwinkel 180° und 540°, zu denen der Kolben den unteren Totpunkt durchläuft, sind dabei mit BDC gekennzeichnet, und die zum oberen Totpunkt gehörenden Kurbelwellenwinkel 0°, 360° und 720° mit TDC. Diese Konventionen gelten für alle Figuren.

Unterhalb der horizontalen Achse des Diagramms von Figur 1 sind die erfindungsgemäß bevorzugten Intervalle für das Öffnen bzw. Schließen der Ventile beim direkten Anlassen der Brennkraftmaschine dargestellt. Hierbei handelt es sich im Einzelnen um die folgenden Intervalle:
- Δ_{EVO} = [160°; 200°]: Das Öffnen der Auslaßventile EV findet vorzugsweise in einem Bereich von ±20° um den (ersten) unteren Totpunkt BDC statt, welcher die Expansionsphase von der Ausstoßphase trennt. Hierdurch wird eine maximale Ausnutzung der Expansionsarbeit gewährleistet.
- Δ_{EVC} = [340°; 380°]: Das Schließen der Auslaßventile EV findet vorzugsweise bei ±20° um den (mittleren) oberen Totpunkt TDC des Kolbens statt, damit eine möglichst vollständige Entfernung der Abgase aus dem Zylinder erfolgt.
- Δ_{IVO1} = [340°; 380°]: Die Einlaßventile öffnen gemäß einer ersten Variante im Bereich von ±20° um den oberen Totpunkt TDC, um einen Rückfluß von Abgasen in den Zylinder und die zu leistende Pumparbeit zu minimieren. Dabei erfolgt eine Abstimmung mit dem Schließen der Auslaßventile EV dahingehend, daß möglichst kein Überlapp zwischen Einlaß- und Auslaßventilen besteht, das heißt, daß beide nicht gleichzeitig geöffnet sind.
- Δ_{IVO2} = [380°, 480°]: Alternativ kann eine Öffnung der Einlaßventile auch hi n-ter dem oberen Totpunkt TDC erfolgen, um eine beschleunigte Lufteinströmung und damit bessere Mischung von Luft und Kraftstoff zu erreichen. Die hierdurch erzielbare bessere Verbrennung kann den Nachteil einer erhöhten Pumparbeit überkompensieren.
- Δ_{IVC} = [560°, 660°]: Ein Schließen der Einlaßventile weit hinter dem (zweiten) unteren Totpunkt BDC des Kolbens sorgt dafür, daß der Kolben eine geringere Kompressionsarbeit zu leisten hat.

Das in Figur 1 gezeigte Diagramm bezieht sich auf eine Brennkraftmaschine mit einer variablen Ventilsteuerung, bei welcher die Phasen der Einlaß-Nockenwelle und der Auslaß-Nockenwelle separat einstellbar sind. Das heißt, die in Figur 1 gezeigten Kurven EV, IV der Ventilöffnungen können jeweils komplett und in ihrer Form unverändert unabhängig voneinander nach links (Frühverstellung) oder rechts (Spätverstellung) verschoben werden. In diesem Falle werden die Ventilzeiten wie dargestellt so weit wie möglich aus den oben erläuterten bevorzugten Intervallen gewählt. Dabei ist die jeweilige Öffnungsdauern der Ventile nicht variabel einstellbar und auf andere Betriebsanforderungen als den Start, wie beispielsweise den Teillast- oder Vollastbetrieb, ausgelegt.

Figur 2 zeigt die Situation bei einer Brennkraftmaschine, bei welcher die Einlaß-Nockenwelle phasenverschoben werden kann und die Öffnungs- bzw. Schließzeitpunkte der Auslaßventile EV ganz oder teilweise variabel eingestellt werden können. In diesem Falle erfolgt beim Direktstart wie dargestellt das Öffnen EVO der Einlaßventile vorzugsweise beim unteren Totpunkt BDC und ihr Schließen EVC beim oberen Totpunkt TDC des Kolbens. Beim letztgenannten Zeitpunkt findet auch das Öffnen IVO der Einlaßventile statt.

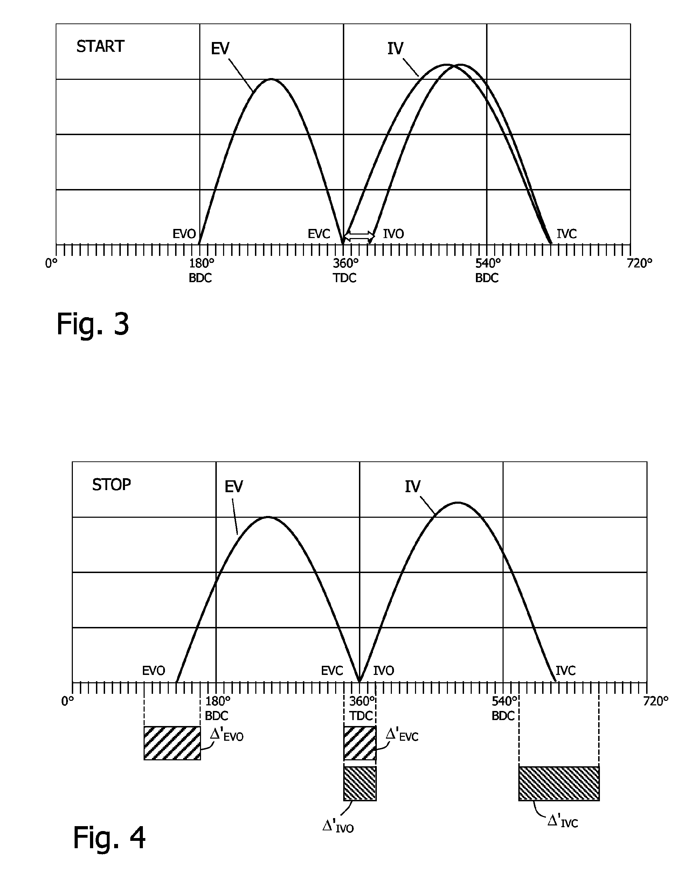

Figur 3 zeigt eine bevorzugte Ventilsteuerung, wenn die Öffnungs- und Schließzeitpunkte sowohl der Einlaßventile IV als auch der Auslaßventile EV ganz oder teilweise variabel festgelegt werden können. Bei einem solchen System ist auch eine kompromißlose Auslegung der Ventilöffnungsdauern für den Startvorgang möglich. In diesem Falle erfolgt beim Direktstart die Zeitsteuerung der Auslaßventile EV wie bei Figur 2, während der Öffnungszeitpunkt IVO der Einlaßventile IV variabel im bevorzugten Winkelintervall hinter dem oberen Totpunkt TDC eingestellt wird.

Figur 4 zeigt eine erfindungsgemäß bevorzugte Ventilzeitsteuerung für die Auslaufphase einer Brennkraftmaschine, welche nach dem Motorstillstand durch eine direkte Verbrennung direkt oder unterstützt gestartet werden soll. Um dabei die Bereitstellung einer möglichst großen Frischluftmenge im Motor sowie ein möglichst ruhiges Auslaufen des Motors sicherzustellen, werden die Öffnungs- und Schließzeiten der Einlaß- und Auslaßventile vorzugsweise aus den nachfolgend erläuterten Intervallen gewählt:
- Δ'_{EVO} = [90°; 160°]: Das Öffnen der Auslaßventile EV findet vorzugsweise früh vor dem (ersten) unteren Totpunkt BDC statt, welcher die Expansionsphase von der Ausstoßphase trennt. Hierdurch wird eine maximale Entfernung der Abgase unterstützt.
- Δ'_{EVC} = [340°; 380°]: Das Schließen der Auslaßventile EV findet vorzugsweise bei ±20° um den (mittleren) oberen Totpunkt TDC des Kolbens statt, damit eine möglichst vollständige Entfernung der Abgase aus dem Zylinder erfolgt.
- Δ'_{IVO} = [340°; 380°]: Die Einlaßventile öffnen im Bereich von ±20° um den oberen Totpunkt TDC, um einen Rückfluß von Abgasen in den Zylinder zu minimieren. Dabei erfolgt eine Abstimmung mit dem Schließen der Auslaßventile EV dahingehend, daß möglichst kein Überlapp zwischen Einlaß- und Auslaßventilen besteht, d.h., daß beide nicht gleichzeitig geöffnet sind.
- Δ'_{IVC} = [560°, 660°]: Ein Schließen der Einlaßventile weit hinter dem (zweiten) unteren Totpunkt BDC des Kolbens sorgt dafür, daß der Kolben eine geringere Kompressionsarbeit zu leisten hat. Der Motor läuft daher ruhiger aus.

Das in Figur 4 konkret dargestellte Zeitsteuerungsverhalten der Einlaßventile IV und Auslaßventile EV gilt für verschiedene Ausführungsformen der variablen Ventilsteuerung, und zwar insbesondere:
- eine separate, variable Phasensteuerung der Einlaß- und Auslaßnocken;
- eine teilweise oder vollständig variable Zeitsteuerung der Auslaßnocken;
- ganz oder teilweise variable Zeitsteuerungen der Einlaß- und Auslaßnocken.

## Patentansprüche

1. Verfahren zur Steuerung einer Brennkraftmaschine angrenzend an einen Motorstillstand, wobei bereits während des Anlassens der Brennkraftmaschine eine Verbrennung initiiert wird,
**dadurch gekennzeichnet, daß**
die Ventilzeiten (IVO, IVC, EVO, EVC) derart gesteuert werden, daß beim Anlassen der Brennkraftmaschine, bis zum Erreichen einer vorgegebenen Mindestdrehzahl eine maximale Arbeitsleistung aus der Verbrennung in den Zylindern genutzt wird.

2. Verfahren nach Anspruch 1,
**dadurch gekennzeichnet, daß**
dem Anlassen der Brennkraftmaschine ein Rückdrehen der Kurbelwelle vorgeschaltet sein kann.

3. Verfahren nach Anspruch 1 oder2,
**dadurch gekennzeichnet, daß**
während des Anlassens der Brennkraftmaschine die Auslaßventile (EV) in der Nähe des unteren Totpunktes (BDC) eines Kolbens, vorzugsweise in einem Intervall (Δ_{EVO}) von ±20° Kurbelwellenwinkel um den unteren Totpunkt herum, geöffnet werden.

4. Verfahren nach mindestens einem der Ansprüche 1 bis 3,
**dadurch gekennzeichnet, daß**
während des Anlassens der Brennkraftmaschine die Auslaßventile (EV) in der Nähe des oberen Totpunktes (TDC) eines Kolbens, vorzugsweise in einem Intervall (Δ_{EVC}) von ±20° Kurbelwellenwinkel um den oberen Totpunkt herum, geschlossen werden.

5. Verfahren nach mindestens einem der Ansprüche 1 bis 4,
**dadurch gekennzeichnet, daß**
während des Anlassens der Brennkraftmaschine die Einlaßventile (IV) in der Nähe des oberen Totpunktes (TDC) eines Kolbens, vorzugsweise in einem Intervall (Δ_{IVO1}) von ±20° Kurbelwellenwinkel um den oberen Totpunkt herum, oder weit hinter dem oberen Totpunkt (TDC), vorzugsweise in einem Intervall (Δ_{IVO2}) von 20° bis 120° Kurbelwellenwinkel hinter dem oberen Totpunkt (TDC) eines Kolbens, geöffnet werden.

6. Verfahren nach mindestens einem der Ansprüche 1 bis 5,
**dadurch gekennzeichnet, daß**
während des Anlassens der Brennkraftmaschine die Einlaßventile (IV) weit hinter dem unteren Totpunkt (BDC), vorzugsweise in einem Intervall (Δ_{IVC}) von 20° bis 120° Kurbelwellenwinkel hinter dem unteren Totpunkt (TDC) eines Kolbens, geschlossen werden.

7. Verfahren nach mindestens einem der Ansprüche 1 bis 6,
**dadurch gekennzeichnet, daß**
während des Auslaufens der Brennkraftmaschine die Auslaßventile (EV) vor dem unteren Totpunkt (BDC) eines Kolbens, vorzugsweise in einem Intervall (Δ'_{EVO}) von 90° bis 20° Kurbelwellenwinkel vor dem unteren Totpunkt, geöffnet werden.

8. Verfahren nach mindestens einem der Ansprüche 1 bis 7,
**dadurch gekennzeichnet, daß**
während des Auslaufens der Brennkraftmaschine die Auslaßventile (EV) in der Nähe des oberen Totpunktes (TDC) eines Kolbens, vorzugsweise in einem Intervall (Δ'_{EVC}) von ±20° Kurbelwellenwinkel um den oberen Totpunkt herum, geschlossen werden.

9. Verfahren nach mindestens einem der Ansprüche 1 bis 8,
**dadurch gekennzeichnet, daß**
während des Auslaufens der Brennkraftmaschine die Einlaßventile (IV) in der Nähe des oberen Totpunktes (TDC) eines Kolbens, vorzugsweise in einem Intervall (Δ'_{IVO}) von ±20° Kurbelwellenwinkel um den oberen Totpunkt herum, geöffnet werden.

10. Verfahren nach mindestens einem der Ansprüche 1 bis 9,
**dadurch gekennzeichnet, daß**
während des Auslaufens der Brennkraftmaschine die Einlaßventile (IV) weit hinter dem unteren Totpunkt (BDC) eines Kolbens, vorzugsweise in einem Intervall (Δ'_{IVC} von 20° bis 120° Kurbelwellenwinkel hinter dem unteren Totpunkt (TDC), geschlossen werden.

11. Brennkraftmaschine mit Direkteinspritzung, Fremdzündung und einer variablen Ventilsteuerung,
**dadurch gekennzeichnet, daß**
die Ventilsteuerung dazu eingerichtet ist, ein Verfahren nach mindestens einem der Ansprüche 1 bis 10 auszuführen.
